(19) Europäisches Patentamt / European Patent Office / Office européen des brevets

(11) **EP 3 229 367 B1**

(12) **EUROPEAN PATENT SPECIFICATION**

(45) Date of publication and mention
of the grant of the patent:
**07.10.2020 Bulletin 2020/41**

(21) Application number: **14905548.5**

(22) Date of filing: **07.11.2014**

(51) Int Cl.:
*H02P 27/06* (2006.01)    *H02P 3/18* (2006.01)

(86) International application number:
**PCT/JP2014/079519**

(87) International publication number:
**WO 2016/072003 (12.05.2016 Gazette 2016/19)**

(54) **POWER CONVERTER AND CONTROL METHOD OF POWER CONVERTER**

STROMWANDLER UND REGELUNGSVERFAHREN FÜR EINEN STROMWANDLER

CONVERTISSEUR DE PUISSANCE ET PROCÉDÉ DE COMMANDE DE CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2017 Bulletin 2017/41**

(73) Proprietor: **Hitachi Industrial Equipment Systems
Co., Ltd.
Tokyo 101-0022 (JP)**

(72) Inventor: **ARAO, Yusuke
Tokyo 101-0022 (JP)**

(74) Representative: **Strehl Schübel-Hopf & Partner
Maximilianstrasse 54
80538 München (DE)**

(56) References cited:
**EP-A2- 2 320 556        JP-A- S62 261 398
JP-A- 2008 220 100    JP-A- 2013 188 000**

## Description

### TECHNICAL FIELD

The present invention relates to a power converter and a control method of the power converter.

### BACKGROUND ART

As the background art of this technical field, there is JP-A-2013-188000 (Patent Literature 1).

In the present disclosure, it is described that "when a rotation indication of the motor 3 is not received from the switch 4 and the rotation speed detected by the speed detection unit 14 is less than the predetermined value, the control unit 16 short-circuits between the terminals of the motor 3 by turning on the respective FETs 31, 33, and 35. In addition, when the rotation indication of the motor 3 is not received from the switch 4 and the rotation speed detected by the speed detection unit 14 is equal to or greater than the predetermined value, the control unit 16 applies the pulse voltage corresponding to the AC voltage generating torque in a direction in which the rotation of the motor 3 is hindered to the terminals of the motor 3 from the inverter 13" (see Abstract).

In addition, as the background art of this technical field, there is JP-A-2000-217388 (Patent Literature 2).

In the present disclosure, it is described that "during the period where the speed is reduced from the rotation speed at the deceleration start time to the braking method switching speed, braking is performed by a short-circuit braking method in which the deceleration efficiency is low and heat is not generated and during the period where the speed is reduced from the braking method switching speed to the deceleration target speed, braking is performed by the reverse rotation braking method in which heat generation occurs in the transistors Q1 to Q6 and the deceleration rate is high. Although the length of the short-circuit braking period is not necessarily the same as the length of the reverse rotation braking period, by choosing the short-circuit braking method and the reverse rotation braking method in the first half and second half of the braking period, merits of both the methods can be utilized so that the deceleration period can be reduced while heat generation is suppressed" (see Abstract).

### CITATION LIST

### PATENT LITERATURE

PATENT LITERATURE 1: JP-A-2013-188000
PATENT LITERATURE 2: JP-A-2000-217388

EP 2 320 556 A2 disclosed a power converter with a DC braking function and PWM controller means with zero vector output.

### SUMMARY OF INVENTION

### TECHNICAL PROBLEM

Patent Literature 1 describes a method in which the lagging phase control where braking of the rotation of the motor 3 is performed by applying the voltage having the phase lagging with respect to the phase of the induced voltage to the terminals of the motor 3 and generating torque in a direction in which the rotation of the motor 3 is hindered is switched to short-circuit braking where short-circuit is performed between the terminals of the motor 3 when the speed becomes low. In the method, there is a problem in that short-circuit braking is performed using the voltage generated by the magnet motor when the speed is low, and thus, when the amount of the voltage generated by the magnet motor is less than the amount of voltage drop of the elements of the power converter when the number of rotation is reduced and the generated voltage is reduced, the amount of the current contributing to a braking force becomes extremely small and the braking force is extremely reduced. Furthermore, there is a problem in that, when the load inertial of the motor is great, the motor does not stop and cannot stop forever. As a method for improving the problems, there is a method in which the three phases are shortcircuited not via the element. However, there is a problem in that it is necessary to provide a physical device in addition to the power converter and the costs increase. In addition, in the method of Patent Literature 1 described above, there is a problem in that braking is performed in the lagging phase control at about the same frequency as that of the induced voltage, and thus the magnet is dragged by the lagging phase when the lagging phase control is continued to stop and the reverse rotation can occur immediately before the stop.

Patent Literature 2 describes a method in which braking is performed by the short-circuit braking method in which the potentials of the field coils L1 to L3 are set to the same and the short-circuit braking method is switched to the reverse rotation braking method in which the field coils L1 to L3 are excited in the reverse rotation direction when the speed of the motor is less than the predetermined speed. In the method described above, there is a problem in that since the reverse rotation voltage having the same cycle as that of the phase of the induced voltage is applied, the induced voltage becomes small in a low-speed area, and thus, when the voltage in the reverse rotation direction is applied, reverse rotation can occur by the voltage.

In this case, a motor and an electric motor are synonymous and an inverter and a power converter are synonymous.

Here, an object of the present invention is to provide a power converter which can quickly brake an electric motor connected with a load having high inertia without the reverse rotation of the electric motor and a control method of the power converter.

SOLUTION TO PROBLEM

To solve the above problem, the present invention suggests the power converter and its control method as defined in the respective independent claims. Further advantageous features are set out in the dependent claims.

ADVANTAGEOUS EFFECTS OF INVENTION

According to the present invention, it is possible to provide a power converter which can be stopped without returning in a direction opposite to an inertial rotation direction.

The problems, configurations, and effects other than those described above are clarified by the explanation of the embodiments described below.

BRIEF DESCRIPTION OF DRAWINGS

[FIG. 1] FIG. 1 is an example of a configuration diagram of a power converter in Embodiments 1, 2, and 3.

[FIG. 2] FIG. 2 is a flowchart of a braking command unit in Embodiment 1.

[FIG. 3] FIG. 3 is an example of a view illustrating the relationship between a braking force and braking current in Embodiment 1.

[FIG. 4] FIG. 4 is a view illustrating an example of the braking force and a current flow path when short-circuit braking is applied.

[FIG. 5] FIG. 5 is a view illustrating an example of the braking force and the current flow path when AC braking is applied.

[FIG. 6] FIG. 6 is a flowchart relating to control switching of a braking command unit in Embodiment 2.

[FIG. 7] FIG. 7 is an example of a view illustrating the relationship of the braking current in Embodiment 2.

[FIG. 8] FIG. 8 is a flowchart relating to the finish determination of an output control unit by a time in Embodiment 3.

[FIG. 9] FIG. 9 is an example of a view illustrating the relationship between the state of braking and the time in Embodiment 3.

[FIG. 10] FIG. 10 is a flow chart relating to the finish determination of the output control unit by average current in Embodiment 4.

[FIG. 11] FIG. 11 is an example of a view illustrating the relationship between the state of braking and the time in Embodiment 4.

DESCRIPTION OF EMBODIMENTS

Hereinafter, embodiments will be described with reference to the accompanying drawings.

EMBODIMENT 1

In this embodiment, an example of a power converter performing AC braking capable of stopping an AC electric motor without the rotation of a shaft of the AC electric motor in a direction opposite to the rotated direction when the AC electric motor is in a deceleration mode, when the amount of the load inertia of the AC electric motor is large, will be described.

The deceleration mode is a mode in which the rotation speed of the AC electric motor is reduced when the AC electric motor is stopped and is a state in which a command for decelerating the AC electric motor is applied to the power converter. The deceleration mode includes operations such as DC braking and short-circuit braking in addition to a case of outputting a three-phase AC voltage for decelerating the power converter.

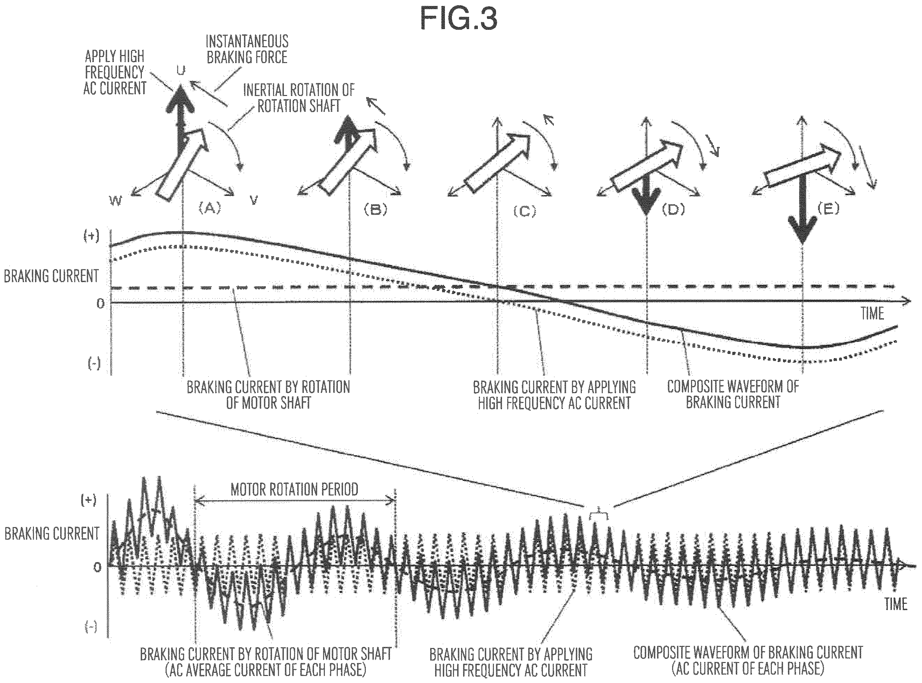

In short-circuit braking, braking is performed by turning on an element connected to, for example, an N line of an AC conversion unit 104 and short-circuiting the three lines of the AC electric motor. In DC braking, braking is performed by applying DC current in a decided phase direction of the AC electric motor. AC braking is characterized in that AC voltage is applied, and thus it will be referred to as AC braking in the present invention. In other words, AC braking is an operation in which braking is performed by applying AC voltage of a high frequency to the AC electric motor. The detail of the operation of AC braking is illustrated in FIG. 3.

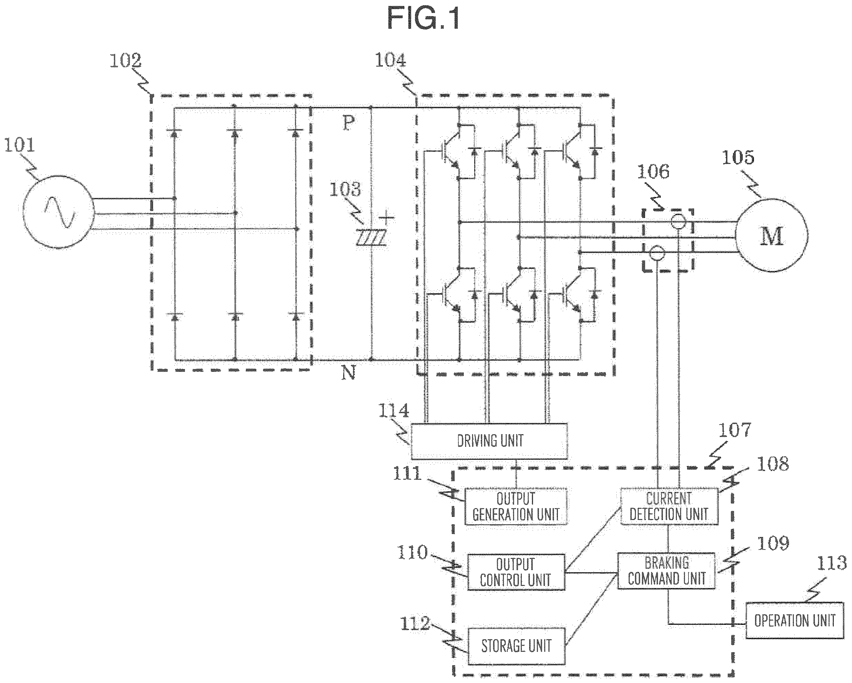

FIG. 1 is an example of a configuration diagram of the power converter in Embodiments 1, 2, and 3. The configuration diagram in which a three-phase AC power source 101 and an AC electric motor 105 are connected to the power converter of this embodiment is illustrated.

The power converter has a DC conversion unit 102, a smoothing capacitor 103, the AC conversion unit 104, a current detector 106, a control calculation unit 107, a current detection unit 108, an output control unit 110, a braking command unit 109, an output generation unit 111, a storage unit 112, an operation unit 113, and a driving unit 114.

The three-phase AC power source 101 is, for example, three-phase AC voltage supplied from an electric power company or AC voltage supplied from a power generator and is output to the DC conversion unit 102.

The DC conversion unit 102 includes, for example, a DC conversion circuit including diodes or a DC conversion circuit using an IGBT and a flywheel diode. The DC conversion unit 102 converts the AC voltage input from the three-phase AC power source 101 into DC voltage and outputs the DC voltage to the smoothing capacitor 103. DC conversion unit including diodes is illustrated in FIG. 1.

The smoothing capacitor 103 smoothes the DC voltage input from the DC conversion 102 and outputs the DC voltage to the AC conversion unit 104. For example, when the output from the electric motor is DC voltage, the DC voltage can be input to the smoothing capacitor 103 directly from the electric motor not via the DC conversion unit 106.

The AC conversion unit 104 includes, for example, an AC conversion circuit using an IGBT and a flywheel diode and the DC voltage of the smoothing capacitor 103 is input to the AC conversion unit 104. The AC conversion unit 104 uses a PWM output waveform input from the driving unit 114, converts the DC voltage into the AC voltage using the PWM, and outputs the AC voltage to the AC electric motor 105.

The PWM output being output from the AC conversion unit 104 is input to the AC electric motor 105 and the AC electric motor 105 drives a load. Specifically, the case of a synchronous electric motor will be described in Embodiment 1.

The current detector 106 includes, for example, a hall CT and a shunt resistor, detects current flowing between the AC conversion unit 104 and the AC electric motor 105, and outputs the detected result to the current detection unit 108.

The control calculation unit 107 includes, for example, a microcomputer, an ASIC, and a memory. The current signal from the current detector 106 or the operation command from the operation unit 113 is input to the control calculation unit 107 and the control calculation unit 107 performs various calculations and outputs the calculation results to the operation unit 113 or the AC conversion unit 104.

Current data of respective phases output from the current detector 106 is input to the current detection unit 108. The current detection unit 108 converts the acquired AC current value of each phase into an effective current value as an effective value. Furthermore, the current detection unit 108 averages or filters the acquired AC current value of each phase and uses the value as the AC average current value, and then the current detection unit 108 converts the AC average current value into the average effective current value as an effective value. Then, the current detection unit 108 outputs the respective current data to the output control unit 110.

The AC current value of each phase and the effective current value, the AC average current value of each phase, and the average effective current value from the current detection unit 108, and the braking command from the braking command unit 109 are input to the output control unit 110. The output control unit 110 calculates an output command or an AC braking command and outputs the command to the output generation unit 111. In addition, when the electric motor is driven, the output control unit 110 calculates an output phase command and an output voltage command as an output command from the output frequency command, the acquired current, and various electric motor constants. In addition, when AC braking is performed, the output control unit 110 detects the number of rotation of the electric motor from the AC current phase of each phase input from the current detection unit 108 and the AC average current phase of each phase during AC braking and uses the number of rotation of the electric motor for determining the start and stop operations of AC braking.

The stop command output from the operation unit 113, the AC current value of each phase, the effective current value, the AC average current value of each phase, and the average effective current value from the current detection unit 108, and the braking time stored in the storage unit 112 are input to the braking command unit 109. The braking command unit 109 calculates a braking command and outputs the braking command to the output control unit 110.

The output command information output from the output control unit 110 is input to the output generation unit 111. The output generation unit 111 generates PWM output waveform data and outputs the data to the driving unit 114.

The storage unit 112 includes, for example, a magnetic disk, an optical disk, a flash memory, or an EEPROM. Various data from the operation unit 113, for example, is input to the storage unit 112 and the storage unit 112 stores the data. In addition, a data acquisition request from the output control unit 110 or the braking command unit 109 is input to the storage unit 112 and the storage unit 112 outputs the data corresponding to the acquisition request to each requestor.

The operation unit 113 has, for example, an output terminal portion sending a signal to the outside. The braking command information from the braking command unit 109 is input to the operation unit 113 and the operation unit 113 outputs a signal to an external device connected thereto. Furthermore, the operation unit 113 has, for example, an input terminal portion through which a signal is input from the outside. When a signal is input to the input terminal portion, the operation unit 113 outputs a braking command to the braking command unit 109.

The PWM data output from the output generation unit 111 is input to the driving unit 114 and the driving unit 114 outputs a PWM output waveform to each element of the AC conversion unit 104.

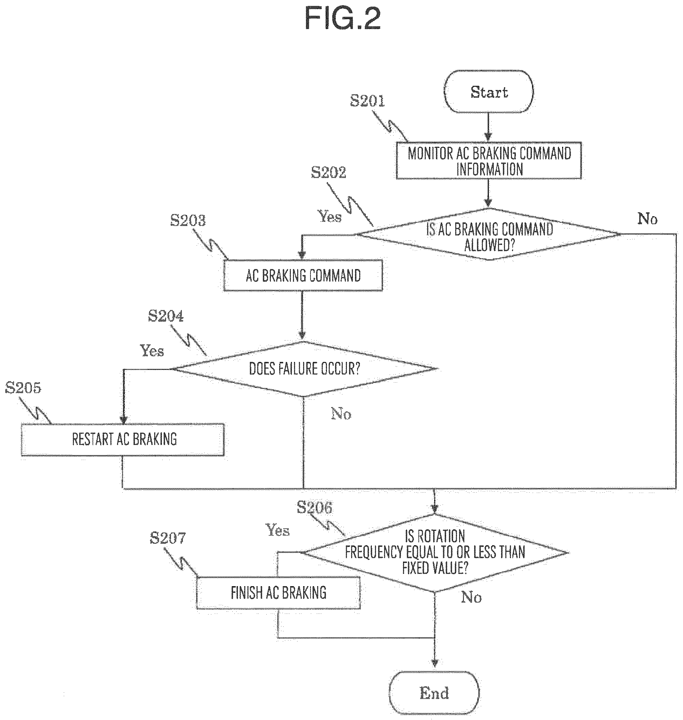

FIG. 2 is a flowchart of the output control unit 110 for commanding AC braking in Embodiment 1.

The output control unit 110 outputs a command for driving the synchronous electric motor connected thereto and monitors the braking command input from the braking command unit 109 at the same time (S201).

The output control unit 110 determines whether the AC braking command is present or absent (S202). When there is no AC braking command allowance signal, the output control unit 110 continuously commands driving of the synchronous electric motor and, when there is an AC braking command allowance signal, the output control unit 110 outputs the AC braking command to the output generation unit 111 (S203).

In addition, the output control unit 110 monitors failure in a power monitoring device, for example, failure in the current effective value detected by the current detection unit 108, by setting, for example, a current value necessary for protection in advance (S204). When there is no failure, the AC braking command is continuously performed and, when there is failure, the output control unit 110 turns off outputting and restarts AC braking (S205).

In relation to restarting of AC braking, a threshold value whether to restart is stored in the storage unit 112 in advance and whether to restart may be determined by reading the data at the time of restarting. In addition, the output control unit 110 calculates the number of rotation of the electric motor from the AC average current phase of each phase input from the current detection unit and determines whether the calculated rotation frequency is less than the frequency, for example, a value set as a start frequency of the power converter, at which it can be determined as stop in advance or a fixed value of rotation as low as 0.1 Hz (S206). When the calculated rotation frequency is not less than the value, AC braking is continuously performed and, when the calculated rotation frequency is less than the value, the output control unit 110 determines that the rotation of the electric motor is stopped and finishes AC braking (S207). The power converter may be restarted or stopped after AC braking is finished.

FIG. 3 is an example of a view illustrating the relationship between a braking force and braking current in AC braking of Embodiment 1.

FIG. 3 illustrates an example of the current which flows at the time of braking when AC single axis voltage is applied at the frequency higher than the rotation frequency of the shaft of the synchronous electric motor. The braking current includes the current (illustrated by the broken line) flowing by the induced voltage generated by the rotation of the synchronous electric motor and the current (illustrated by the dotted line) flowing by the AC voltage output of the power converter and the synthetic current(illustrated by the solid line) actually flows to the AC conversion unit. In the upper side of FIG. 3, a partial enlarged view of the current at the time of braking is illustrated. The current (illustrated by the broken line) flowing by the induced voltage generated by the rotation of the synchronous electric motor flows according to the relationship between the direction of the magnetic field emitted by the magnet of the synchronous electric motor and the rotation direction of the magnet depending on the general Fleming's left hand rule. The braking force by the rotation of the magnet is applied to be opposite to the rotation direction of the magnet from the directions of the flowing current and the magnetic field emitted by the magnet depending on the Fleming's left hand rule. Since the AC voltage is applied at the frequency higher than the rotation frequency of the synchronous electric motor, the current (illustrated by the dotted line) flowing by the AC voltage output of the power converter becomes AC current. The maximum frequency driving the synchronous electric motor is stored in the storage unit 112 and the cycle of five times mechanical constant calculated from, for example, an inertial load or the frequency of five times of the maximum frequency is set to the frequency of the single-axis AC voltage output, in such a manner that the output control unit 110 applies AC voltage without generation of a rotation force which can lead the synchronous electric motor to failure. The frequency of the applied AC voltage may be based on the present frequency of the synchronous electric motor and is set to any frequency as long as the synchronous electric motor steps out and the rotation cannot be continued. Since the AC voltage which does not generate the rotation force is applied at a frequency higher than the rotation frequency of the synchronous electric motor, the forces applied to the synchronous electric motor are instantaneously offset by, for example, the pair of (A) and (E) or (B) and (D) in FIG. 3 and only the braking force by the rotation of the motor shaft remains. Furthermore, the synthetic current of the braking current corresponds to the AC current of each phase and only the braking current by the rotation of the motor shaft, that is, the AC average current, can be detected by using averaging or low-pass filtering. The number of rotation of the electric motor can be detected from the cycle of the AC average current which is the braking current by the rotation of the motor shaft. In this way, the power converter performs braking of synchronous electric motor.

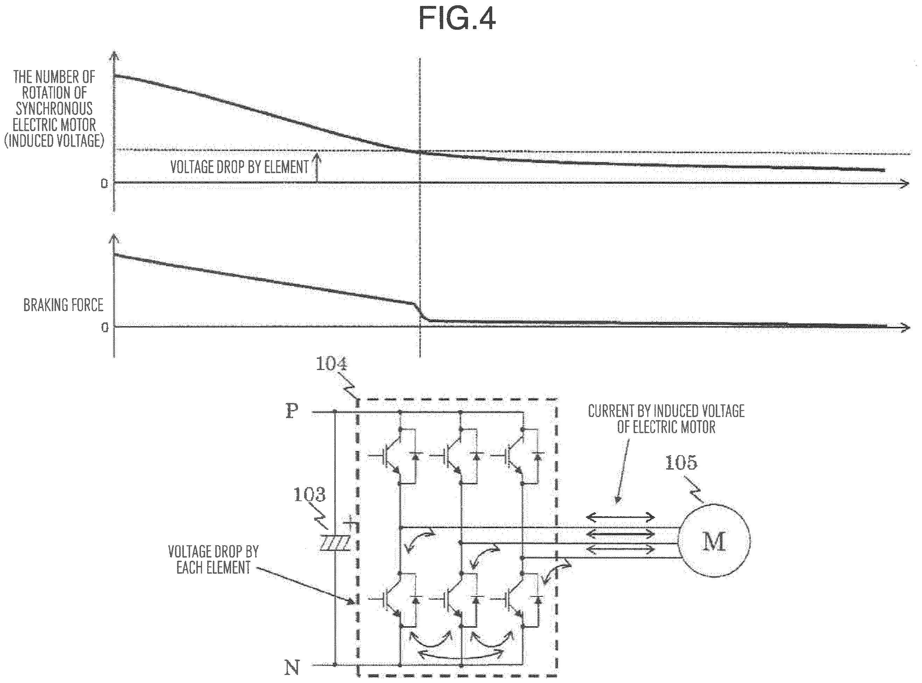

FIG. 4 is a view illustrating an example of the braking force and a current flow path when short-circuit braking is applied.

FIG. 4 illustrates a state in which, when the voltage level is less than a predetermined voltage level when the number of rotation of the synchronous electric motor is reduced, the braking force is reduced. As illustrated in the lower side of FIG. 4, to short-circuit the three phases of the synchronous electric motor, the elements of the AC conversion unit 104 are subjected to switching so that the potential becomes the same as that of the N line of, for example, the smoothing capacitor 103, and thus the current flows in short-circuit braking according to the voltage generated by the synchronous electric motor. However, when, in such short-circuit braking, the voltage generated by the synchronous electric motor is less than the voltage drop determined by each element by the voltage drop of each element, such as an IGBT or a diode, of the AC conversion unit 104, the current is prevented from flowing, and thus the braking force disappears. Particularly, when the inertial load is large, the synchronous electric motor continuously rotates by the inertia.

In this embodiment, AC braking is performed to avoid reduction in the braking force by the voltage drop.

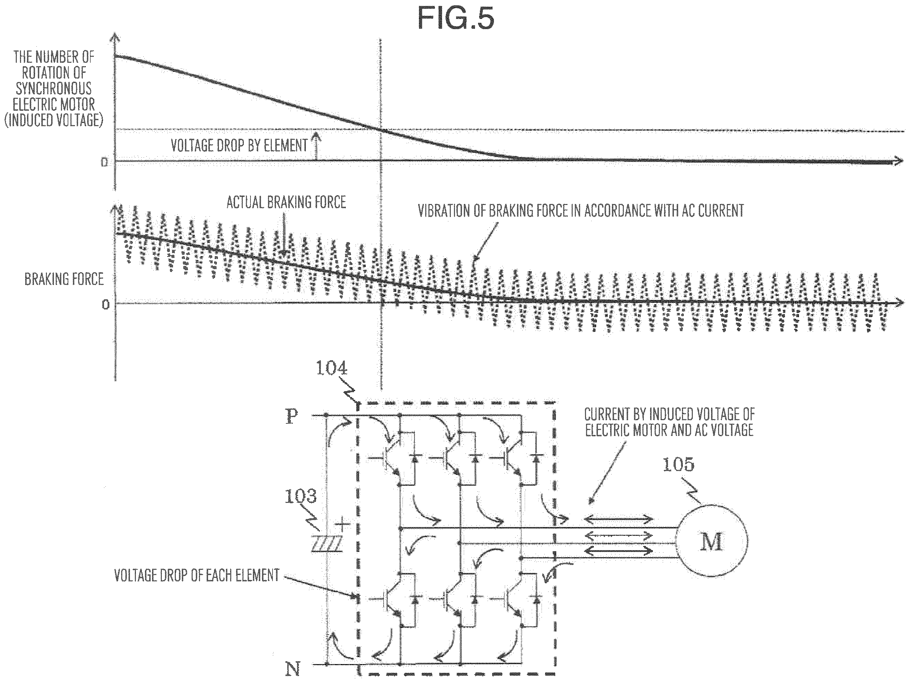

FIG. 5 is a view illustrating an example of the braking force and the current flow path when AC braking is applied.

FIG. 5 illustrates a state in which, even when the voltage level is less than a predetermined voltage level when the number of rotation of the synchronous electric motor is reduced, the braking force follows the number of rotation of the synchronous electric motor. Since the DC voltage stored in the smoothing capacitor 103 instantaneously flows in AC braking, as illustrated in the lower side of FIG. 5, the extent of the influence of the voltage drop in each element, such as an IGBT or a diode, of the AC conversion unit 104 is reduced, and thus current continuously flows and the braking force can be ensured. Since AC current is applied in AC braking at the high frequency at which rotation is not imparted to the synchronous electric motor, the braking forces are offset from a long-term view, and thus the actual braking force illustrated by the solid line in FIG. 5 is applied during braking.

The power converter of this embodiment provides a mechanism in which the braking force is applied only in a stopping direction until the power converter stops, in such a manner that the power converter can be stopped in such a method described above even when the inertial load is large.

EMBODIMENT 2

In this embodiment, a modification example of Embodiment 1 will be described. In this embodiment, the same reference numerals and characters are given to parts which are used in common in Embodiment 1 and the detail of parts different from those of Embodiment 1 will be described.

In Embodiment 2, the configuration of the intermediate transfer belt 1 of Embodiment 1 is used.

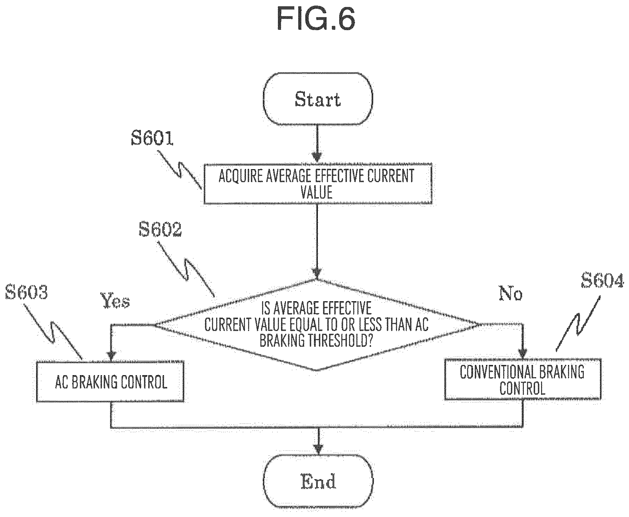

FIG. 6 is a flowchart relating to control switching of a braking command unit in Embodiment 2.

The braking command unit 109 monitors the average effective current value input from the current detection unit 108 (S601) and determines whether the average effective current value is equal to or less than the predetermined AC braking threshold (S602).

12

When the average effective current value is not equal to or less than the AC braking threshold, braking control so far, for example, short-circuit braking or DC braking in which DC current is applied while the phase axis is fixed, is performed (S604). When the average effective current value is equal to or less than the AC braking threshold, AC braking is 5 performed (S605).

The AC braking threshold is set from, for example, the resistance value and inductance of the synchronous electric motor and the voltage obtained by subtracting the voltage drop of the elements of the AC conversion unit 104 from the induced voltage generated by the rotation so that current of equal to or more than, for example, 10% of the rated current of the 10 synchronous electric motor flows as output. As described above, when the AC braking threshold is set, the voltage of equal to or more than the voltage drop is instantaneously applied to each element by applying the AC voltage of the high frequency even when the number of rotation of the synchronous electric motor is reduced and the induced voltage is reduced, and thus current continuously flows. The AC current by applying AC voltage also includes the 15 braking current by rotation, and thus the braking force can be maintained.

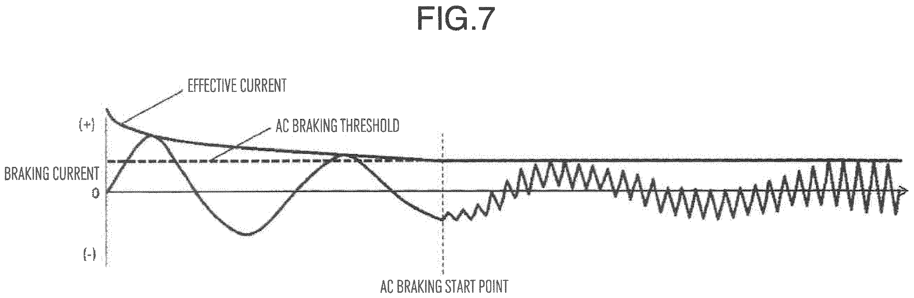

FIG. 7 illustrates a state in which AC braking is started by the AC braking threshold. In FIG. 7, AC current flowing to a U phase of the synchronous electric motor is illustrated as an example of the braking current. In addition, in FIG. 7, the current effective value calculated from three-phase AC current is illustrated. The current effective value is 20 calculated using, for example, MATH. 1 and MATH. 2 described below.

[MATH. 1]

$$\begin{pmatrix} I_\alpha \\ I_\beta \end{pmatrix} = \begin{pmatrix} 1 & 0 \\ -1/\sqrt{3} & -2/\sqrt{3} \end{pmatrix} \begin{pmatrix} I_u \\ I_w \end{pmatrix}$$

(MATH. 1)

MATH. 1 shows the conversion of U-phase current (Iu) and W-phase current (Iw) 25 of three-phase AC current into a current value (Iα) in a U-phase direction and a current value (Iβ) in an axial direction perpendicular to the U phase.
[MATH. 2]

$$I_{output} = \sqrt{I_\alpha^2 + I_\beta^2}$$

(MATH. 2)

MATH. 2 calculates the amount of effective current (Ioutput) from the current in the two-axis directions calculated in MATH. 1. Average effective current can be calculated in the same way as calculating the effective current by replacing the AC current (MATH. 1) (MATH. 2) with AC average current.
In FIG. 7, the amount of the AC voltage applied during AC braking is controlled so that the amount of the effective current maintains a constant value in accordance with reduction in the number of rotation of the synchronous electric motor so that the amount of the braking current is prevented from becoming extremely small.
The power converter of this embodiment provides a mechanism in which, even when an inertial load is large, the power converter can be stopped in such a method described above by applying the braking force only in the stopping direction until the power converter stops.

EMBODIMENT 3

A modification example of Embodiment 2 will be described in this embodiment. In this embodiment, the same reference numerals and characters are given to parts which are used in common in Embodiment 1 and the detail of parts different from those of Embodiment 1 will be described.
The configuration of the configuration diagram 1 of Embodiment 1 is used in Embodiment 3.

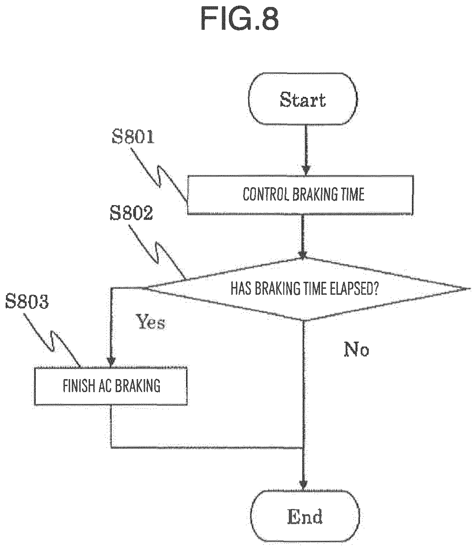

FIG. 8 is a flowchart relating to a finish determination of the output control unit 110 by a time.
Embodiment 3 is an example in which parts of finish determination (S207) (S208) of FIG. 2 illustrated in Embodiment 1 are replaced with parts of (S801) to (S803) illustrated in FIG. 8.
The output control unit 110 updates the braking time of AC braking when AC braking is started (S801). The output control unit 110 compares a braking stop time which is stored in the storage unit 112 in advance and the undated braking time (S802). When the updated braking time is within the period of the braking stop time, braking is continued and, when the updated braking time is out of the braking stop time, AC braking is finished (S803). The power converter may be restarted or stopped after AC braking is finished. Setting the braking stop time is effective when braking is necessary even after the AC electric motor is stopped.

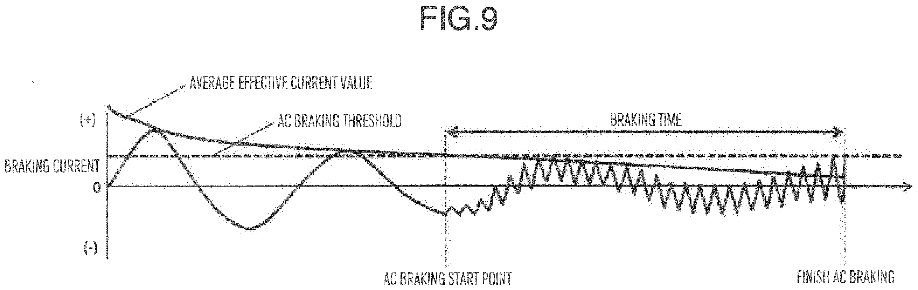

FIG. 9 is an example of a view illustrating the relationship between the state of braking and a time. In FIG. 9, similar to FIG. 7, AC current and effective current flowing to the U phase of the synchronous electric motor are illustrated as an example of braking current.
In FIG. 9, a state in which the output is cut off after a predetermined time elapses from the start of AC braking as illustrated in FIG. 8. In relation to the time of performing AC braking, a braking time of completely stopping the power converter by AC braking is set in advance.
The power converter of this embodiment provides a mechanism in which the braking force is applied only in a stopping direction until the power converter stops, in such a manner that the power converter can be stopped with monitoring a time in such a method described above even when the inertial load is large.

EMBODIMENT 4

A modification example of Embodiment 2 is illustrated in this embodiment. In this embodiment, the same reference numerals and characters are given to parts which are used in common in Embodiment 1 and the detail of parts different from those of Embodiment 1 will be described.

The configuration of the configuration diagram 1 of Embodiment 1 is used in Embodiment 4.

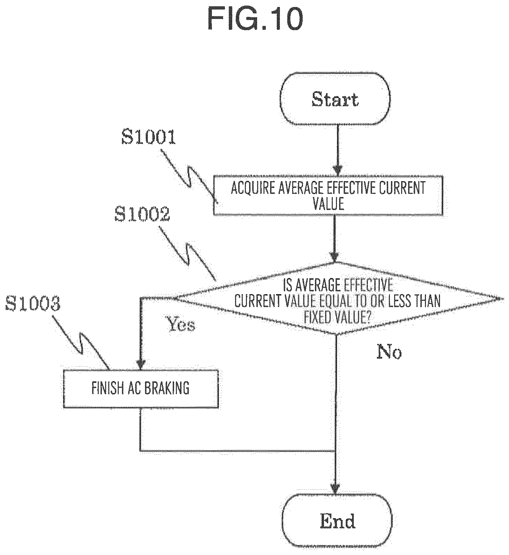

FIG. 10 is a flowchart relating to a finish determination of the output control unit 110 by an average current.

Embodiment 3 is an example in which parts of finish determination (S207) (S208) of FIG. 2 illustrated in Embodiment 1 are replaced with parts of (S1001) to (S1003) illustrated in FIG. 8.

The output control unit 110 acquires the average effective current when AC braking is started (S1001). The output control unit 110 compares a specific value of stop determination current which is stored in the storage unit 112 in advance and the acquired average effective current value (S1002). When the acquired average effective current value is equal to or greater than the specific value, braking is continued and, when the acquired average effective current value is equal to or less than the specific value, AC braking is finished (S803). The power converter may be restarted or stopped after AC braking is finished. Setting the stop determination current can reduce the wear of component elements of the AC conversion unit 104 because the stop of the power converter can be determined using the value of the average effective current flowing by the rotation, and thus AC voltage is prevented from being applied for an unnecessarily long time.

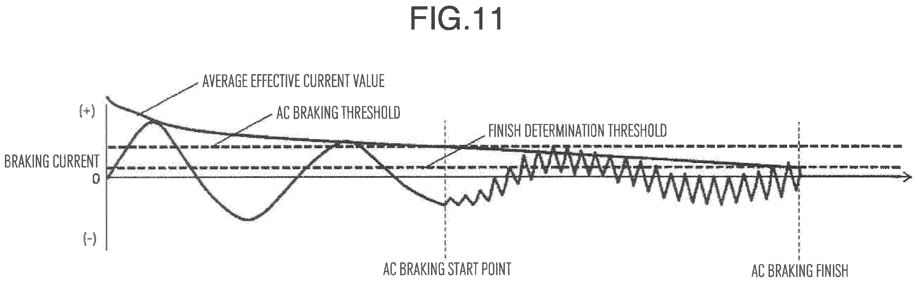

FIG. 11 is an example of a view illustrating the relationship between the state of braking and the time. In FIG. 11, similar to FIG. 7, current flowing to a U phase of the synchronous electric motor and the average effective current value are illustrated as an example of the braking current.

In FIG. 11, a state in which the output is cut off when the average effective current value is smaller than a finish determination threshold after AC braking is started as illustrated in FIG. 10 is illustrated. In relation to the finish determination threshold of AC braking, a current value where it is considered that the synchronous electric motor is stopped is set in advance.

The power converter of this embodiment provides a mechanism in which, even when an inertial load is large, the power converter can be stopped with monitoring output current in such a method described above by applying the braking force only in the stopping direction until the power converter stops.

As described above, the embodiments of the power converters described below and the control methods of those power converters are disclosed.

The power converter includes an AC conversion unit which converts DC power into predetermined AC power, a current detector which detects current flowing in the AC conversion unit, and a control unit which controls output of the AC conversion unit and the power converter is characterized in that the control unit performs AC braking so that braking is performed by allowing AC current of a condition not applying a rotation force to an AC electric motor to flow in a deceleration mode of the AC electric motor connected to the power converter.

The power converter is characterized in that AC braking by the control unit is performed by applying AC voltage of a frequency higher than the rotation frequency of the AC electric motor.

The power converter is characterized in that the application of AC voltage in the control unit is performed by fixing a phase in a certain axis direction and applying AC voltage in one axis direction.

The power converter is characterized in that the control unit performs AC voltage control on the basis of the comparison of an output current value obtained by converting current detected by the current detector and a predetermined value set in advance.

The power converter is characterized in that the control unit performs AC voltage control on the basis of a predetermined voltage value decided in association with elements of the AC conversion unit.

The power converter is characterized in that the control unit performs short-circuit braking so that braking is applied by short-circuiting three phases and performs AC braking when a speed is equal to or less than a predetermined speed.

The power converter is characterized in that the control unit performs AC braking for a predetermined time set in advance and finishes braking.

The power converter is characterized in that the control unit finishes a braking operation on the basis of an AC average current value set in advance.

It should be noted that the present invention is not limited to the embodiments described above and various modifications are included. For example, the embodiments are described in detail in order to explain the present invention in an easy-to-understand manner and are not necessarily limited to those having all the described configurations. In addition, it is possible to replace part of the configuration of one embodiment with the configuration of another embodiment and the configuration of another embodiment can be added to the configuration of one embodiment.

Furthermore, it is possible to add, remove, and replace other configurations with respect to part of the configuration of each embodiment. Also, in relation to each of above-described configurations, functions, processing units, processing means, and the likes, part or all thereof may be realized by hardware by, for example, designing them with an integrated circuit pr the like. In addition, each of the above-described configurations, functions, and the likes may be realized by software by interpreting and executing a program with which the processor realizes each function. Information on such as a program, a table, and a file for realizing each function can be stored in a recording device such as a memory, a hard disk, and a Solid State Drive (SSD) or a recording medium such as an IC card, an SD card, and a DVD.

In addition, a control line and an information line indicate what is considered to be necessary for the explanation and are not intended to be limited to necessarily indicate the entirety of the control line and the information line of a product. In practice, it can be considered that almost all the configurations are connected to one another.

REFERENCE SIGNS LIST

| | |
|---|---|
| 101 | three-phase AC power source |
| 102 | DC conversion unit |
| 103 | smoothing capacitor |
| 104 | AC conversion unit |
| 105 | AC electric motor |
| 106 | current detector |
| 107 | control calculation unit |
| 108 | current detection unit |
| 109 | braking command unit |
| 110 | output control unit |
| 111 | output generation unit |
| 112 | storage unit |
| 113 | operation unit |
| 114 | driving unit |

**Claims**

1. A power converter comprising:

   an AC conversion unit (104) adapted to convert DC power into predetermined AC power;
   a current detector (106) adapted to detect current flowing to the AC conversion unit; and
   a control unit (110) adapted to control output of the AC conversion unit,
   wherein the control unit is adapted to perform AC braking of a synchronous electric motor (105) connected to the power converter by applying AC voltage of a frequency higher than the rotation frequency of the synchronous electric motor in a deceleration mode to the synchronous electric motor without generating a rotation force to the synchronous electric motor.

2. The power converter according to claim 1, wherein the control unit (110) is adapted to perform the application of AC voltage by fixing a phase in an optional axis direction and applying AC voltage in one axis direction.

3. The power converter according to claim 1, wherein the control unit (110) is adapted to perform AC voltage control on the basis of the comparison of an output current value obtained by converting current detected by the current detector (106) and a predetermined value set in advance.

4. The power converter according to claim 1, wherein the control unit (110) is adapted to perform AC voltage control on the basis of a predetermined voltage value determined in association with elements of the AC conversion unit (104).

5. The power converter according to claim 1, wherein the control unit (110) is adapted to perform short-circuit braking so that braking is applied by short-circuiting three phases and to perform AC braking when a speed is equal to or less than a predetermined speed.

6. The power converter according to claim 1, wherein the control unit (110) is adapted to perform AC braking for a predetermined time set in advance and to finish braking.

7. The power converter according to claim 1, wherein the control unit (110) is adapted to finish a braking operation on the basis of an AC average current value set in advance.

8. A control method of a power converter, comprising:

an AC conversion process of converting DC power into predetermined AC power;
a current detection process of detecting current which is converted to flow by the AC conversion process; and
a control process of controlling output to the AC conversion process,
wherein the control process performs AC braking of a synchronous electric motor connected to the power converter by applying AC voltage of a frequency higher than the rotation frequency of the synchronous electric motor in a deceleration mode to the synchronous electric motor without generating a rotation force to the synchronous electric motor.

9. The control method of the power converter according to claim 8,
wherein the application of AC voltage in the control process is performed by fixing a phase in an optional axis direction and applying AC voltage in one axis direction.

10. The control method of the power converter according to claim 8,
wherein the control process performs AC voltage control on the basis of the comparison of an output current value obtained by converting current detected in the current detection process and a predetermined value set in advance.

11. The control method of the power converter according to claim 8,
wherein the control process performs AC voltage control on the basis of a predetermined voltage value determined in association with elements of the AC conversion unit.

12. The control method of the power converter according to claim 8,
wherein the control process performs short-circuit braking so that braking is applied by short-circuiting three phases, and performs AC braking when a speed is equal to or less than a predetermined speed.

13. The control method of the power converter according to claim 8,
wherein the control process performs AC braking for a predetermined time set in advance and finishes braking.

**Patentansprüche**

1. Stromwandler, umfassend:

eine Wechselstromwandlungseinheit (104), die dazu ausgelegt ist, Gleichstrom in vorgegebenen Wechselstrom zu wandeln;
einen Stromdetektor (106), der dazu ausgelegt ist, in die Wechselstromwandlungseinheit fließenden Strom zu detektieren; und
eine Steuereinheit (110), die dazu ausgelegt ist, die Ausgabe der Wechselstromwandlungseinheit zu steuern,
wobei die Steuereinheit dazu ausgelegt ist, Wechselstrombremsen eines mit dem Stromwandler verbundenen elektrischen Synchronmotors (105) auszuführen, indem eine Wechselstromspannung einer höheren Frequenz als der Rotationsfrequenz des elektrischen Synchronmotors in einem Entschleunigungsmodus an den elektrischen Synchronmotor angelegt wird, ohne eine Rotationskraft auf den elektrischen Synchronmotor zu erzeugen.

2. Stromwandler nach Anspruch 1, wobei die Steuereinheit (110) dazu ausgelegt ist, das Anlegen der Wechselstromspannung durch Fixieren einer Phase in einer optionalen Achsenrichtung und Anlegen von Wechselstromspannung in einer Achsenrichtung auszuführen.

3. Stromwandler nach Anspruch 1, wobei die Steuereinheit (110) dazu ausgelegt ist, Wechselstromspannungssteuerung auf der Grundlage des Vergleiches eines durch Wandeln von Strom erhaltenen Ausgabestromwertes, der vom Stromdetektor (106) detektiert worden ist, und eines im Voraus eingestellten vorgegebenen Wertes auszuführen.

4. Stromwandler nach Anspruch 1, wobei die Steuereinheit (110) dazu ausgelegt ist, Wechselstromspannungssteuerung auf der Grundlage eines vorgegebenen Spannungswertes auszuführen, der im Zusammenhang mit Elementen der Wechselstromwandlungseinheit (104) bestimmt worden ist.

5. Stromwandler nach Anspruch 1, wobei die Steuereinheit (110) dazu ausgelegt ist, Kurzschlussbremsen auszuführen, so dass das Bremsen angewendet wird, indem drei Phasen kurzgeschlossen werden, und Wechselstrombremsen auszuführen, wenn eine Geschwindigkeit kleiner oder gleich einer vorgegebenen Geschwindigkeit ist.

6. Stromwandler nach Anspruch 1, wobei die Steuereinheit (110) dazu ausgelegt ist, Wechselstrombremsen für einen im Voraus eingestellten vorgegebenen Zeitraum auszuführen und das Bremsen zu beenden.

7. Stromwandler nach Anspruch 1, wobei die Steuereinheit (110) dazu ausgelegt ist, einen Bremsvorgang auf der Grundlage eines im Voraus eingestellten durchschnittlichen Wechselstromwertes zu beenden.

8. Steuerverfahren für einen Stromwandler, umfassend:

einen Wechselstromwandlungsvorgang, bei dem Gleichstrom in vorgegebenen Wechselstrom gewandelt wird;
einen Stromdetektionsvorgang, bei dem Strom detektiert wird, der vom Wechselstromwandlungsvorgang zum Fließen gewandelt wird; und
einen Steuervorgang, bei dem die Ausgabe des Wechselstromwandlungsvorgangs gesteuert wird,
wobei der Steuervorgang Wechselstrombremsen eines mit dem Stromwandler verbundenen elektrischen Synchronmotors ausführt, indem Wechselstromspannung einer höheren Frequenz als der Rotationsfrequenz des elektrischen Synchronmotors in einem Entschleunigungsmodus an den elektrischen Synchronmotor angelegt wird, ohne eine Rotationskraft auf den elektrischen Synchronmotor zu erzeugen.

9. Steuerverfahren des Stromwandlers nach Anspruch 8,
wobei das Anlegen der Wechselstromspannung im Steuervorgang durch Fixieren einer Phase in einer optionalen Achsenrichtung und Anlegen von Wechselstromspannung in einer Achsenrichtung ausgeführt wird.

10. Steuerverfahren des Stromwandlers nach Anspruch 8,
wobei der Steuervorgang Wechselstromspannungssteuerung auf der Grundlage des Vergleichs eines durch Wandeln von Storm erhaltenen Ausgabestromwertes, der im Stromdetektionsvorgang detektiert worden ist, und eines im Voraus eingestellten vorgegebenen Wertes ausführt.

11. Steuerverfahren des Stromwandlers nach Anspruch 8,
wobei der Steuervorgang Wechselstromspannungssteuerung auf der Grundlage eines vorgegebenen Spannungswertes ausführt, der in Zusammenhang mit Elementen der Wechselstromwandlungseinheit bestimmt worden ist.

12. Steuerverfahren des Stromwandlers nach Anspruch 8,
wobei der Steuervorgang Kurzschlussbremsen ausführt, so dass das Bremsen durch Kurzschließen von drei Phasen angewendet wird, und Wechselstrombremsen ausführt, wenn eine Geschwindigkeit kleiner oder gleich einer vorgegebenen Geschwindigkeit ist.

13. Steuerverfahren des Stromwandlers nach Anspruch 8,
wobei der Steuervorgang Wechselstrombremsen für einen im Voraus eingestellten vorgegebenen Zeitraum ausführt und das Bremsen beendet.

**Revendications**

1. Convertisseur de puissance comprenant :

une unité de conversion CA (104) conçue pour convertir une puissance CC en une puissance CA prédéterminée ;
un détecteur de courant (106) conçu pour détecter le courant circulant vers l'unité de conversion CA ; et

une unité de commande (110) conçue pour commander la sortie de l'unité de conversion CA,

dans lequel l'unité de commande est conçue pour effectuer un freinage à courant alternatif d'un moteur électrique synchrone (105) connecté au convertisseur de puissance par application d'une tension alternative d'une fréquence supérieure à la fréquence de rotation du moteur électrique synchrone dans un mode de décélération au moteur électrique synchrone sans générer de force de rotation sur le moteur électrique synchrone.

2. Convertisseur de puissance selon la revendication 1, dans lequel l'unité de commande (110) est conçue pour effectuer l'application d'une tension alternative en fixant une phase dans une direction d'axe optionnelle et en appliquant une tension alternative dans une direction d'axe.

3. Convertisseur de puissance selon la revendication 1, dans lequel l'unité de commande (110) est conçue pour effectuer une commande de tension alternative sur la base de la comparaison d'une valeur de courant de sortie obtenue par conversion d'un courant détecté par le détecteur de courant (106) et d'une valeur prédéterminée définie à l'avance.

4. Convertisseur de puissance selon la revendication 1, dans lequel l'unité de commande (110) est conçue pour effectuer une commande de tension alternative sur la base d'une valeur de tension prédéterminée déterminée en association avec des éléments de l'unité de conversion CA (104).

5. Convertisseur de puissance selon la revendication 1, dans lequel l'unité de commande (110) est conçue pour effectuer un freinage par court-circuit de sorte que le freinage soit appliqué en court-circuitant trois phases et pour effectuer un freinage à courant alternatif lorsqu'une vitesse est inférieure ou égale à une vitesse prédéterminée.

6. Convertisseur de puissance selon la revendication 1, dans lequel l'unité de commande (110) est conçue pour effectuer un freinage à courant alternatif pendant une durée prédéterminée fixée à l'avance et pour terminer le freinage.

7. Convertisseur de puissance selon la revendication 1, dans lequel l'unité de commande (110) est conçue pour terminer une opération de freinage sur la base d'une valeur de courant alternatif moyenne réglée à l'avance.

8. Procédé de commande d'un convertisseur de puissance, comprenant :

un processus de conversion CA pour convertir une puissance CC en une puissance CA prédéterminée ;
un processus de détection de courant pour détecter un courant qui est converti pour circuler par le processus de conversion CA ; et
un processus de commande pour commander la sortie vers le processus de conversion CA,
dans lequel le processus de commande effectue un freinage à courant alternatif d'un moteur électrique synchrone connecté au convertisseur de puissance par application d'une tension alternative d'une fréquence supérieure à la fréquence de rotation du moteur électrique synchrone dans un mode de décélération au moteur électrique synchrone sans générer de force de rotation sur le moteur électrique synchrone.

9. Procédé de commande du convertisseur de puissance selon la revendication 8, dans lequel l'application d'une tension alternative dans le processus de commande est effectuée en fixant une phase dans une direction d'axe optionnelle et en appliquant une tension alternative dans une direction d'axe.

10. Procédé de commande du convertisseur de puissance selon la revendication 8, dans lequel le processus de commande effectue une commande de tension alternative sur la base de la comparaison d'une valeur de courant de sortie obtenue par conversion du courant détecté dans le processus de détection de courant et d'une valeur prédéterminée définie à l'avance.

11. Procédé de commande du convertisseur de puissance selon la revendication 8, dans lequel le processus de commande effectue une commande de tension alternative sur la base d'une valeur de tension prédéterminée déterminée en association avec des éléments de l'unité de conversion CA.

12. Procédé de commande du convertisseur de puissance selon la revendication 8, dans lequel le processus de commande effectue un freinage par court-circuit de sorte que le freinage est appliqué en court-circuitant trois phases, et effectue un freinage à courant alternatif lorsqu'une vitesse est inférieure ou égale à une vitesse prédéterminée.

**13.** Procédé de commande du convertisseur de puissance selon la revendication 8, dans lequel le processus de commande effectue un freinage à courant alternatif pendant une durée prédéterminée définie à l'avance et termine le freinage.

# FIG.1

EP 3 229 367 B1

# FIG.2

S201

Start

MONITOR AC BRAKING COMMAND INFORMATION

S202

Yes

IS AC BRAKING COMMAND ALLOWED?

No

S203

AC BRAKING COMMAND

S204

Yes

DOES FAILURE OCCUR?

No

S205

RESTART AC BRAKING

S206

Yes

IS ROTATION FREQUENCY EQUAL TO OR LESS THAN FIXED VALUE?

No

S207

FINISH AC BRAKING

End

# FIG.3

APPLY HIGH FREQUENCY AC CURRENT

INSTANTANEOUS BRAKING FORCE

INERTIAL ROTATION OF ROTATION SHAFT

U

W    (A)    V      (B)      (C)      (D)      (E)

BRAKING CURRENT

(+)

0

(-)

TIME

BRAKING CURRENT BY ROTATION OF MOTOR SHAFT

BRAKING CURRENT BY APPLYING HIGH FREQUENCY AC CURRENT

COMPOSITE WAVEFORM OF BRAKING CURRENT

BRAKING CURRENT

(+)

MOTOR ROTATION PERIOD

0

TIME

(-)

BRAKING CURRENT BY ROTATION OF MOTOR SHAFT (AC AVERAGE CURRENT OF EACH PHASE)

BRAKING CURRENT BY APPLYING HIGH FREQUENCY AC CURRENT

COMPOSITE WAVEFORM OF BRAKING CURRENT (AC CURRENT OF EACH PHASE)

EP 3 229 367 B1

# FIG.4

# FIG.5

THE NUMBER OF ROTATION OF SYNCHRONOUS ELECTRIC MOTOR (INDUCED VOLTAGE)

VOLTAGE DROP BY ELEMENT

0

BRAKING FORCE

ACTUAL BRAKING FORCE

VIBRATION OF BRAKING FORCE IN ACCORDANCE WITH AC CURRENT

0

104

P

103

CURRENT BY INDUCED VOLTAGE OF ELECTRIC MOTOR AND AC VOLTAGE

105

M

VOLTAGE DROP OF EACH ELEMENT

N

# FIG.6

Start

S601

ACQUIRE AVERAGE EFFECTIVE CURRENT VALUE

S602

S603
Yes

IS AVERAGE EFFECTIVE CURRENT VALUE EQUAL TO OR LESS THAN AC BRAKING THRESHOLD?

No
S604

AC BRAKING CONTROL

CONVENTIONAL BRAKING CONTROL

End

## FIG.7

EFFECTIVE CURRENT

AC BRAKING THRESHOLD

AC BRAKING START POINT

BRAKING CURRENT

(+)

0

(−)

# FIG.8

```
                          ┌──────────┐
                          │  Start   │
                          └────┬─────┘
                               │
                               ▼
S801              ┌─────────────────────────────┐
                  │    CONTROL BRAKING TIME     │
                  └──────────────┬──────────────┘
                                 │
S802                             ▼
                    ╱────────────────────────────╲
              ┌────◁   HAS BRAKING TIME ELAPSED?   ▷
              │     ╲────────────────────────────╱
              │  Yes            │ No
S803          ▼                 │
      ┌────────────────┐        │
      │ FINISH AC BRAKING│      │
      └────────┬───────┘        │
               │                │
               └────────┐       │
                        │       ▼
                     ┌──────────────┐
                     │     End      │
                     └──────────────┘
```

FIG.9

# FIG.10

```
                              ┌──────────┐
                              │  Start   │
                              └────┬─────┘
                                   │
                                   ▼
S1001                    ┌─────────────────────────┐
                         │ ACQUIRE AVERAGE EFFECTIVE CURRENT │
                         │          VALUE           │
S1002                    └─────────────┬───────────┘
                                       │
                                       ▼
S1003                        ╱IS AVERAGE EFFECTIVE╲
                    Yes    ╱CURRENT VALUE EQUAL TO OR LESS THAN╲
            ┌──────────◄──╲      FIXED VALUE?      ╱──►
            │              ╲                      ╱    No
            ▼               ╲_____╱
    ┌────────────────┐                │
    │ FINISH AC BRAKING │             │
    └────────┬───────┘                │
             │                        │
             └────────────┐           │
                          ▼           ▼
                     ┌──────────┐
                     │   End    │
                     └──────────┘
```

# FIG.11

AVERAGE EFFECTIVE CURRENT VALUE

AC BRAKING THRESHOLD

FINISH DETERMINATION THRESHOLD

(+)

BRAKING CURRENT

0

(−)

AC BRAKING START POINT

AC BRAKING FINISH

EP 3 229 367 B1

**EP 3 229 367 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013188000 A
- JP 2000217388 A

- EP 2320556 A2